# EUROPEAN PATENT APPLICATION

(11) **EP 2 727 451 A1**
(43) Date of publication of application: **07.05.2014**
(21) Application number: 13191207.3
(22) Date of filing: 31.10.2013
(51) Int. Cl.: A01D 34/73

(54) **Rotary blade for weed cutter**

(30) Priority: 02.11.2012 JP 2012242938
(71) Applicant: Kabushiki-Kaisha Tomitahamono, Tsubame-shi Niigata (JP)
(72) Inventor: Tomita, Hiroshi, Tsubame-shi, Niigata (JP)
(74) Representative: Granleese, Rhian Jane

(57) **Abstract**

A rotary blade for a weed cutter, in which a center face part (3) including an axial center (2) of a thin disc body (1) wholly made of a spiral steel material is in the form of a horizontal plane, and a circumferential part adjacent to the center face part has a one rotation-directional corrugated cutting part (7) having one side face of concave form (4) and the other side face of convex form (5), wherein the cutting part face is corrugated in the circular curved-surface form (8) instead of the triangular form.

## Description

This invention relates to a rotary blade for a weed cutter for weeding.

In paved road circumstances, it appears that an unpaved part on the boundary between a paved part constructed with asphalt or concrete and a footpath and/or a broken part is in state where the soil is open to the view. For that reason, the thick growth of various weeds is found in such unpaved and/or broken part, resulting in the marred appearance of the streets, sometimes with the consequences of the traffic accidents.

In view of the above, the present inventor invented a manually operated weeding tool for removing such weeds as described the above and was then granted a utility model right thereto as Utility Model Registration No. 3167722. In this connection, the present inventor has come to develop a rotary blade for an automatic weed cutter in the manner of further improving the above weeding tool.

Then, researches have been made, and as a result, it has been found that there are some known rotary blades for the weed cutter used for removing the weeds as disclosed in the following patent documents.
[Patent document 1] Japanese Examined Utility Model Registration Application Publication No. Sho 53-49117
[Patent document 2] Japanese Unexamined Utility Model Registration Application Publication No. Sho 57-56426
[Patent document 3] Japanese Unexamined Utility Model Registration Application Publication No. Sho 63-36225
[Patent document 4] Japanese Unexamined Utility Model Registration Application Publication No. Sho 56-76322

However, with the rotary blades as disclosed in the above patent documents, a cutting face takes such form and/or tool profile that it can be anticipated that there will be some cases where the cutting face gets damaged such as chipped when the rotary blade in state where it is mounted to the weed cutter is in contact with a hard wall surface at the edge of the paved road or like road constructed with concrete.

Accordingly, it is an object of the present invention to provide a rotary blade which is obtained by improvements of the conventional rotary blade as disclosed in each of the above well-known patent documents in the manner of changing a blade material together with cutting face arrangements, and permits satisfactory weeding operations to be always effected.

A rotary blade according to the present invention comprises a thin disc body wholly made of a spring steel material, the thin disc body being arranged such that a center face part including the axial center of the thin disc body is in the form of a horizontal plane, and a circumferential part adjacent to the central face part has a one rotation-directional corrugated cutting part having one side face of concave form and the other side face of convex form, wherein the cutting part face is corrugated in the circular curved-surface form instead of the triangular form.

The rotaryblade according to the present invention further comprises a large number of vent ports extending through the thin disc body, the vent ports being formed in a back plate secured to one center face part side face adjacent to the cutting part convex face and including the axial center of the thin disc body.

The above and other objects of the invention will be seen by reference to the description taken in connection with the accompanying drawings, in which:

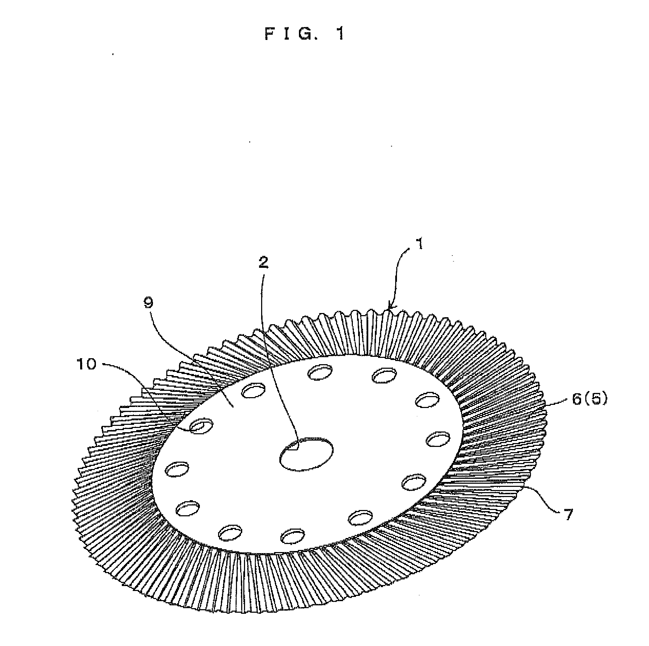

FIG. 1 is a plan perspective view showing a rotary blade body;

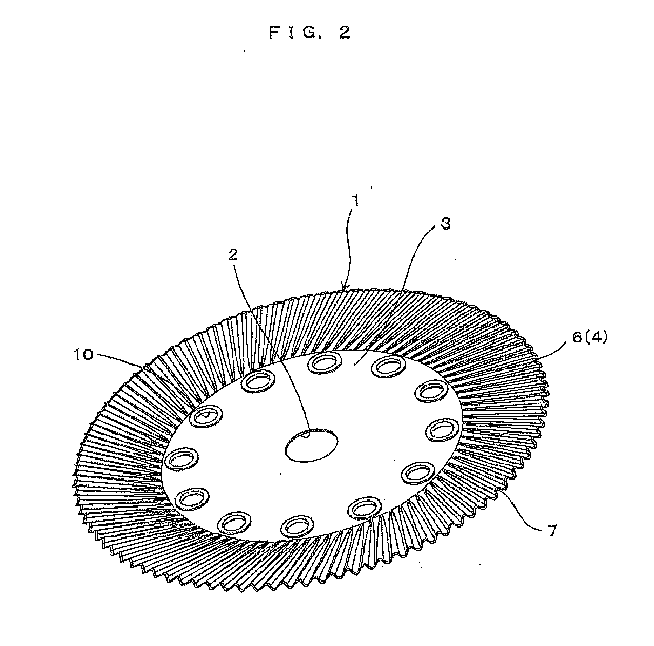

FIG. 2 is a bottom perspective view showing the rotary blade body;

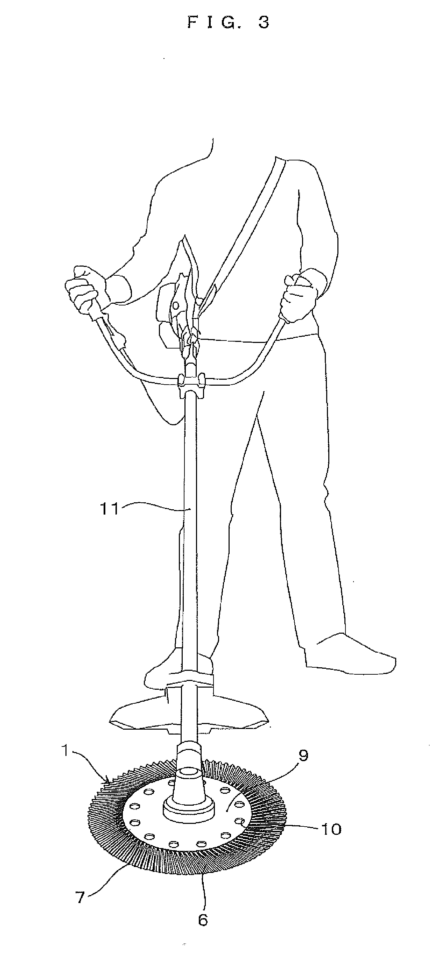

FIG. 3 is a plan perspective view showing the rotary blade body at the time of operations;
FIG. 4 is a side view showing the rotary blade body in the operating condition;
FIG. 5 is a side view showing an essential part of the rotary blade body shown in FIG. 4; and
FIG. 6 is a view showing the comparison of one rotary blade body with the other when being in use, with FIG. 6(A) showing use of the rotary blade body of the present invention, and FIG. 6(B) showing use of a rotary blade body different in material from the above.

With a rotary blade according to the present invention, even when a cutting face comes into contact with a paved road surface constructed with concrete or asphalt in the course of weeding operations, a cutting part on the circumference of the rotary blade will be largely affected by restoration force with the repulsion of the cutting part because of its circular curved-surface form, resulting in no possibility that the cutting part will be damaged and so on.

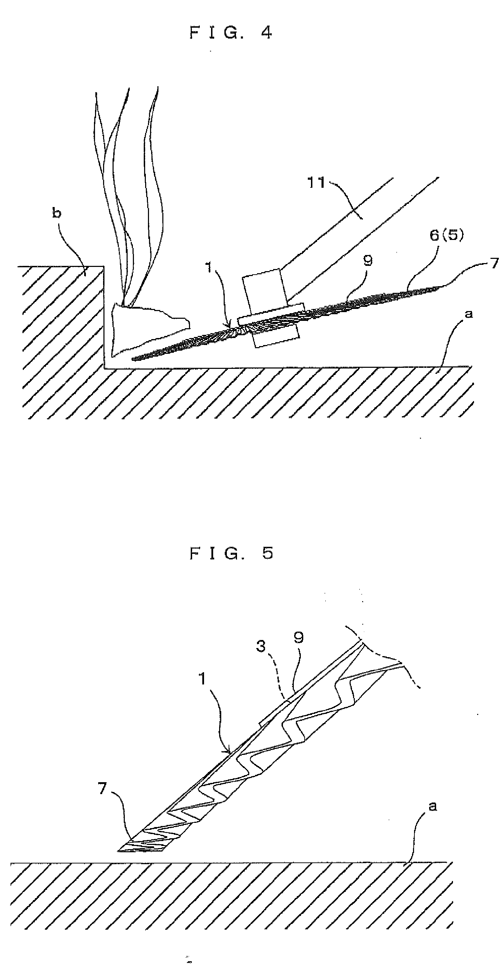

Also, the cutting face ensures that contact thereof with the paved road surface constructed with concrete, asphalt or like hard material allows the cutting edges to be subjected to grinding acutely by friction. Accordingly, a user may operate the rotary blade during the weeding operations in such a manner as to subject the peripheral cutting face of the rotary blade to grinding consciously in contact with the side wall face or like part of the road (see FIGS. 4 and 5).

Reference numeral 1 indicates a thin disc body wholly made of a stainless steel spring steel material, wherein the thin disc body is arranged such that a central face part 3 including an axial center 2 is in the form of a horizontal plane, and a circumferential part adjacent to the central face part has one side face of concave form 4 and the other side face of convex form 5. That is, the thin disc body 1 is of inverted flat plate form on the whole.

Reference numeral 6 indicates a circumferential face of the thin disc body 1, wherein the circumferential face is supposed to have a one rotation-directional proper-angled corrugated cutting part 7.

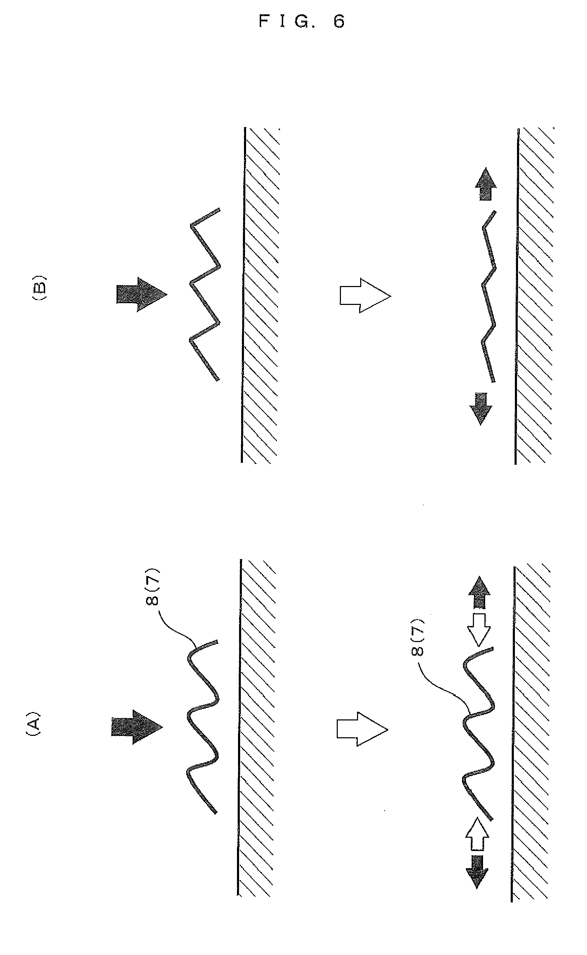

The cutting part 7 is corrugated in the circular curved-surface form 8 (see FIG. 6A) instead of the triangular form (see FIG. 6B).

Reference numeral 9 indicates a back plate secured to the horizontal plane of the center face part 3 of the thin disc body 1, wherein the back plate and the center face part of the thin disc body are secured together by caulking with burring in portions of a large number of vent ports 10.

The vent ports 10 are formed for use as circulation ports for providing smooth air circulation in the manner of preventing the occurrence of a vacuum state that is going to happen between the rotary blade and the road surface due to high-speed rotations of the rotary blade.

It can be therefore understood that the rotary blade body of the present invention is of arrangements as described the above.

Reference numeral 11 indicates an operating rod for a weed cutter, the operating rod being connected to the axial center 2 of the thin disc body 1.

Reference symbol "a" indicates a paved road constructed with concrete or asphalt.

Reference symbol "b" indicates a side wall part of the paved road "a".

The rotary blade according to the present invention comprises the constituent means as described the above. It would be thus appreciated that because of the arrangement that both the top and bottom faces of the cutting part around the thin disc body are of circular curved-surface form, the cutting part of the convexo-concave rotary blade body is affected by the restoration force with the immediate repulsion to the continuous curved surface of the cutting part, even if the pressure applied from the upper side through the operating rod largely acts on the above continuous curved surface, when the circumferential face of the cutting blade is in contact with the hard road surface or the side wall face of the road constructed with concrete or like material in the course of weeding operations. Accordingly, the rotary blade of the present invention can be considered to be a rotary blade in which the circumferential face of the cutting part of the rotary blade body is allowed to maintain the normal form at all times.

When the rotary blade body is brought closer to the paved road surface in the course of weeding operations, the vacuum state occurs due to high-speed rotations of the rotary blade body, in which case, the air will be drawn, leading to a condition in which the weeding operations are hard to be effected. However, with the rotary blade of the present invention, it would be appreciated also that for eliminating the occurrence of such vacuum state, there are provided the large number of vent ports between the central face part of the thin disc body and the back plate, wherein the vent ports are formed for use as the circulation ports for smooth air circulation, resulting in no occurrence of defective weeding operations due to some deficiency in rotations.

It wouldbe appreciated also that in cases where the cutting part around the thin disc body has been brought to a worn or chipped state due to the weeding operations, direct contact of the cutting part with the hard road surface or the side wall face of the road for application of the pressure to the cutting part comes to allow the cutting part to be subjected to grinding.

As a consequence, the rotary blade as a whole would be allowed to smoothly effect the weeding operations with stable rotary force without causing any inconsistent rotation while the rotary blade is making rotation for the weeding operations.

While the invention has been particularly shown and described with reference to the preferred embodiment thereof, it will be understood by those skilled in the art that the foregoing and other changes in form and details can be made therein without departing from the spirit and scope of the invention.

## Claims

1. A rotary blade for a weed cutter, comprising:
a disc body wholly made of a spring steel material, said thin disc body being arranged such that a center face part including the axial center of said disc body is in the form of a horizontal plane, and a circumferential part adjacent to said center face part has a one rotation-directional corrugated cutting part having one side face of concave form and the other side face of convex form, wherein the cutting part face is corrugated in the circular curved-surface form.

2. The rotary blade for the weed cutter according to claim 1, wherein it further comprises a plurality of vent ports extending through said disc body, said vent ports being formed in a back plate secured to the horizontal plane of one center face part side face adjacent to the cutting part convex face and including the axial center of said disc body.
